# EUROPEAN PATENT SPECIFICATION

(11) **EP 4 603 273 B1**
(45) Date of publication and mention of the grant of the patent: **11.11.2026**
(21) Application number: 24157350.0
(22) Date of filing: 13.02.2024
(51) Int. Cl.: B32B 3/02, B32B 3/06, B32B 3/08, B32B 3/14, B32B 3/18, B32B 5/02, B32B 7/12, B64C 1/12

(54) **AIRCRAFT STRUCTURE PART AND METHOD FOR PROVIDING AN AIRCRAFT STRUCTURE PART**
FLUGZEUGSTRUKTURTEIL UND VERFAHREN ZUR BEREITSTELLUNG EINES FLUGZEUGSTRUKTURTEILS
PIÈCE DE STRUCTURE D'AÉRONEF ET PROCÉDÉ DE FOURNITURE D'UNE PIÈCE DE STRUCTURE D'AÉRONEF

(43) Date of publication of application: 20.08.2025
(73) Proprietor: Airbus Operations GmbH, 21129 Hamburg (DE)
(72) Inventor: Poppe, Andreas, 21129 Hamburg (DE); Beumler, Thomas, 21129 Hamburg (DE)
(74) Representative: Airbus Germany

(56) References cited:
- WO-A1-98/53989
- US-A1- 2008 292 849
- US-A1- 2013 316 148

## Description

The present invention relates to an aircraft structure part and a method for providing such an aircraft structure part.

Aircraft, and in particular aircraft fuselages, have distinct areas that are subject to particular demands as to load carrying and load transfer. These areas or the structure parts are often located in areas of the aircraft that are difficult to access. The aircraft structure parts must have a design that prevents cracks from occurring or allow for crack propagation in a controlled manner. Steps along longitudinal skin joints are generally avoided and rare as they are complex to design tolerance-wise and need extra care in fatigue calculation and testing for certification. Parts involved in these joints usually have to be stepped down in many small steps to fulfil aerodynamic and optical requirements with respect to steps in outside surfaces of aircraft fuselages. WO 98/53989 A1 discloses autoclaved laminates as aircraft fuselage structure, comprising a base layer which is an aircraft fuselage skin and an aluminum doubler attached to it in a step-shaped configuration. US 2008/292849 A1 discloses laminated sheets as skin sheet for an aircraft fuselage, which comprise several, such as four, aluminum alloy sheets in a step-shaped configuration. US 2013/316148 A1 discloses fiber-metal laminates comprising mutually bonded fiber-reinforced composite layers and metal sheets as part of an aircraft structure primary part, which is a fuselage.

Although it can be used in many applications, the present invention and the problems underlying it are explained in greater detail in relation to aircrafts. However, the structure parts described can likewise be used in vehicles in all sectors of the transport industry, e. g. for road vehicles, for rail vehicles or for watercraft.

Against this background, it is an object of the present invention to provide an aircraft structure part, that fulfils aerodynamic and optical requirements, provides load carrying capacities, is not or only in a minor extend susceptible to crack formation and crack propagation and can be manufactured in an efficient and cost as well as material saving manner.

This object is achieved by a aircraft structure part having the features of claim 1 that is provided in a method having the features of claim 8 and which is integrated in an aircraft fuselage according to claim 15.

According to a first aspect of the invention an aircraft structure part comprising a stacked arrangement of layers with said layers forming an outer skin of an aircraft fuselage is provided. Said layers comprise at least a first doubler and a basic layer, wherein the first doubler is bonded to the basic layer by a first intermediate bond film layer thus creating a step-shaped configuration of the aircraft structure part. The first doubler includes a first fiber prepreg layer, particularly a glass fiber prepreg layer, positioned at the perimeter of the first doubler and bonded to the basic layer by at least one first bond-film segment deposited adjacent to the first fiber prepreg layer in a first wedge-shaped element. The wedge-shaped element at least partially incorporates the first fiber prepreg layer. The wedge-shaped element is positioned at the run-out of the first doubler and the fiber prepreg layer is positioned underneath the perimeter region of the first doubler. The invention aircraft structure part prevents cracks occurring in the wedge-shaped element from propagating in the basic skin due to the fiber prepreg incorporated therein. The invention aircraft structure part has the advantage of providing a smooth transition of load carrying sheet metal layers inside a stepped longitudinal joint. Basic layer and first doubler are manufactured from a metal material, preferably of aluminum.

A further aspect of the invention lies in a method for providing an aircraft structure part, comprising depositing an intermediate bond film layer on a surface facing the inner skin of the aircraft fuselage, depositing a first fiber prepreg layer, in particular a glass fiber prepreg layer, adjacent to the first intermediate bond film layer, depositing a first doubler on the first intermediate bond film layer and the fiber prepreg layer, depositing at least a first bond film segment adjacent to the first fiber prepreg layer, and autoclaving the aircraft structure part to form a first wedge-shaped element in a run-out region of the first doubler incorporating the area of the first fiber prepreg layer extending beyond the perimeter of the first doubler. The method avoids manufacturing of airport structure parts in a time and material intensive milling process, improves the load carrying properties and reduces or eliminates crack initiation and propagation into the inner skin or basic layer.

A further aspect of the invention lies in an aircraft fuselage provided with an aircraft structure part, wherein the aircraft structure part is a load carrying part of the aircraft fuselage showing no or only reduced crack initiation and limited crack propagation.

Advantageous embodiments and further developments are apparent from the further dependent claims and from the description with reference to the figures.

According to another aspect of the invention the aircraft structure part according further comprises at least one second doubler with a second fiber prepreg layer positioned at the perimeter of the second doubler, wherein the second doubler is bonded to the first doubler by a second intermediate bond film layer, forming a step-shaped configuration of the aircraft structure part. The second fiber prepreg layer is bonded to the first doubler by at least one second bond film segment deposited adjacent to the second fiber prepreg layer in a second wedge-shaped element, at least partially incorporating the second fiber prepreg layer. This provides an advantage, that the overall thickness of the aircraft structure part can be increased having the same advantages as described above with respect to crack formation and propagation. The invention is not limited to aircraft structure parts having two doublers in an arrangement as described before but also encompasses configurations comprising a plurality of doublers in stacked arrangement with step-shaped design and provided on a basic skin or basic layer of an aircraft fuselage. The second and any subsequent doubler are manufactured from a metal material such as aluminum. The second and any subsequent doubler can be provided with at least one step introduced by respective machining in particular by grinding or milling the aluminum to further reduce thickness by stepping down the doubler.

According to another embodiment of the aircraft structure part, the at least first and second wedge-shaped elements are positioned in a run-out region of the first and second doubler, respectively. This configuration further supports a smooth transition of load carrying sheet metal layers inside a stepped longitudinal joint. Furthermore cracks formed in the wedge-shaped elements cannot propagate into metal layers due to the fiber-prepreg layers positioned underneath the wedge-shaped elements.

According to a further embodiment of the aircraft structure part the fibers of the fiber prepreg layers are oriented in a circumferential direction of the doublers. Beside the previously outlined advantages of the invention configuration, this has the advantage, that cracks formed in particular in the area of the one or more wedge-shaped elements, are deflected at an angle of essentially 90 degrees and, in particular, cannot propagate or spread into the metal layers of the aircraft structure part, the basic layer or basic skin, the doubler or into the fuselage.

According to a further embodiment of the aircraft structure part each of the first and second fiber prepreg layer is arranged coplanar to a surface plane of the respective first doubler and the second doubler and projects beyond the surface plane of the respective doubler. This embodiment has the advantage, that cracks if formed in the bond film layer or the wedge shaped elements cannot propagate or spread into the metal layers of the aircraft structure part, the basic layer or skin or in the fuselage and hence impact the load carrying properties of the structure.

According to a further embodiment of the aircraft structure part at least the wedge-shaped elements are formed in an autoclaving process. It is an advantage of this embodiment, that during autoclaving the bond film layers placed adjacent to or on the fiber prepreg layer are incorporated in the wedge-shaped elements thus achieving and/or improving the previously described advantages with respect to crack formation and propagation within the aircraft structure part or fuselage provided therewith.

According to a further embodiment of the method a second bond film segment is deposited covering the area of the first fiber prepreg layer extending beyond the perimeter of a surface of the first doubler and the second bond film segment. This allows for an advantageously improved incorporation of the fiber prepreg layer into the wedge-shaped element during autoclaving.

According to a further embodiment of the method, a second intermediate bond film layer and a second fiber prepreg layer arranged adjacent to the second intermediate bond film layer are deposited on the first doubler and at least one second doubler is deposited on the second intermediate bond film layer and the second fiber prepreg layer wherein the second fiber prepreg layer extends beyond the perimeter of a surface of the second doubler, and a third bond film segment is deposited adjacent to the second fiber prepreg layer. After deposition the aircraft structure part is autoclaved to form a second wedge shaped element in a run-out region of the second doubler incorporating the area of the second fiber prepreg layer that extends beyond the perimeter of the surface of the second doubler. This has the advantage, that the overall number of doublers arranged in a stacked configuration can be increased and adapted to the area of placement of the aircraft structure part and the requirements with respect to load carrying. The invention method is not limited to methods placing two doublers in an arrangement as described above but also contemplates configurations comprising a plurality of doublers in stacked arrangement and manufactured in the invention method.

According to a further embodiment the method a fourth bond film segment is deposited covering the area of the second fiber prepreg layer extending beyond the perimeter of the second doubler and the fourth bond film segment. It is an advantage of this embodiment, that during autoclaving the bond film layers placed adjacent to or on the fiber prepreg layer are incorporated in the wedge-shaped elements at the run-out region of the second doubler thus achieving and/or improving the previously described advantages with respect to crack formation and propagation within the aircraft structure part or a fuselage provided therewith. The invention method is not limited to methods placing two doublers in an arrangement as described above but also encompasses configurations comprising a plurality of doublers in stacked arrangement and manufactured in the invention method.

According to a further embodiment the method before autoclaving at least on separation foil and a forming sheet is deposited on the run-out region of at least one of the first doubler and the second doubler to form at least one of the first and the second wedge-shaped element during autoclaving. This has the advantage that during autoclaving the final shape of the wedge-shaped elements can be determined and adapted to the requirements set out by the envisaged configuration of the aircraft structure part and its region of placement.

According to a further embodiment the method the aircraft structure part is placed on the inner skin of an aircraft fuselage and fastened to the inner skin by means of a plurality of fastener elements, wherein the fastener elements extend through the basic skin and the inner skin and clamp the aircraft structure part with the inner skin thereby bending the basic skin and the at least one doubler at least partially towards the inner skin. This has the advantage, that due to the configuration of the aircraft structure part with added layers of fiber prepregs underneath the end region of the doublers crack initiation in the bond film layer and crack propagation into the metal layers is prevented. The layers of fiber prepregs also prevent a crack if appearing in the wedge-shaped element or the bond film layer from growing and/or from propagating towards the basic layer of the aircraft structure part or the fuselage basic skin.

According to a further embodiment the method a gap formed between the aircraft structure part and the inner skin is filled with a sealant, in particular an interference sealant.

The present invention is explained in more detail below with reference to the embodiments shown in the schematic figures:
- Fig. 1: schematically depicts a view of a prior art aircraft structure part;
- Fig 2: schematically depicts a side sectional view of an aircraft structure part according to an embodiment of the invention in the pre-autoclaving state;
- Fig 3: schematically depicts a side sectional view of an aircraft structure part according to an embodiment of the invention in the post-autoclaving state; and
- Fig 4: schematically depicts a side sectional view of an aircraft structure part according to an embodiment of the invention clamped to the inner skin of an aircraft fuselage.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the detailed description. The elements of the drawings are not necessarily to scale relative to each other. In the figures, like reference numerals denote like or functionally like components, unless indicated otherwise.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

In the figures of the drawings, identical elements, features, and components that have the same function, and the same effect are each given the same reference signs, unless otherwise specified.

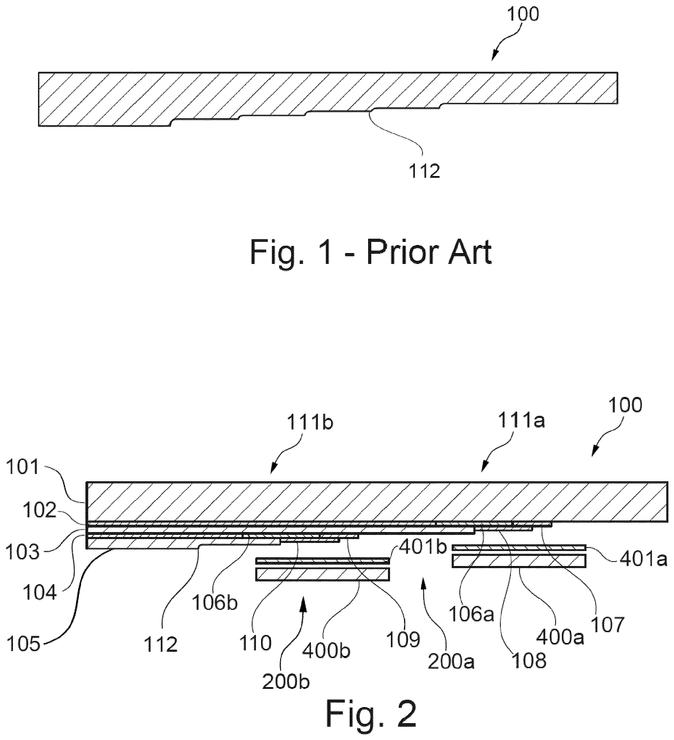

Fig. 1 depicts a view of a prior art aircraft structure part 100 schematically showing a milled single part. In such a milled part design either a milled ramp or small steps 112 are used to create a reduction in thickness, wherein the small steps 112 are reflecting the current standard in manufacturing said aircraft structure part 100 having drawbacks with respect to crack formation and propagation.

Fig 2 schematically depicts a side sectional view of an aircraft structure part 100 according to an embodiment of the invention in the pre-autoclaving state. The aircraft structure part 100 consists of a total of three metal, in particular aluminum based layers, a basic skin layer 101, a first doubler 103 and a second doubler 105 arranged in a stacked configuration. The basic layer 101 can be the outer skin of an aircraft fuselage. To bond the first doubler 103 to the basic layer 101 a first intermediate bond film layer 102 arranged between the two elements is used. The first doubler 103 comprises a first fiber prepreg layer 106a, in particular glass fiber prepreg layer, arranged at the perimeter 111a of the first doubler 103 underneath the first doubler 103. The first fiber prepreg layer 106a is bonded to the basic layer 101 by means of a first bond-film segment 107 deposited adjacent to the first fiber prepreg layer 106a and covered by a second bond-film segment 108. On the first doubler 103 a second doubler 105 is placed, bonded to the first doubler 103 by means of a second intermediate bond film layer 104. The second doubler 105 is shorter than the first doubler 103 thus forming a step-shaped configuration of the aircraft structure part 100. A second fiber prepreg layer 106b is arranged at the perimeter 111b of the second doubler 105 underneath the second doubler 105 and bonded to the first doubler 103 by means of a third bond film segment 109 deposited adjacent to the second fiber prepreg layer 106b and covered by a fourth bond-film segment 110. During manufacturing the second doubler 105 a small step 112 was inserted by milling the second doubler 105 in order to create a further reduction in thickness. The second doubler 105 can also be provided with more than one step 112 to further step down the second doubler 105.

Before autoclaving a separation foil 401a and forming sheet 400a is deposited on the arrangement placed in the run-out region 200a of the first doubler 103 and a further separation foil 401b and forming sheet 400b is deposited on the arrangement placed in the run-out region 200b of the second doubler 105. During autoclaving the forming sheets 400a, b form a first wedge-shaped element 500a in the run-out region 200a of the first doubler 103 and a second wedge-shaped element 500b in the run-out region 200b of the second doubler 105. The wedge-shaped elements 500a, b at least partially incorporate the fiber prepreg layers 106a, b and extend each run-out regions 200a, b of the first doubler 103 and the second doubler 105 towards the respective previous layer.

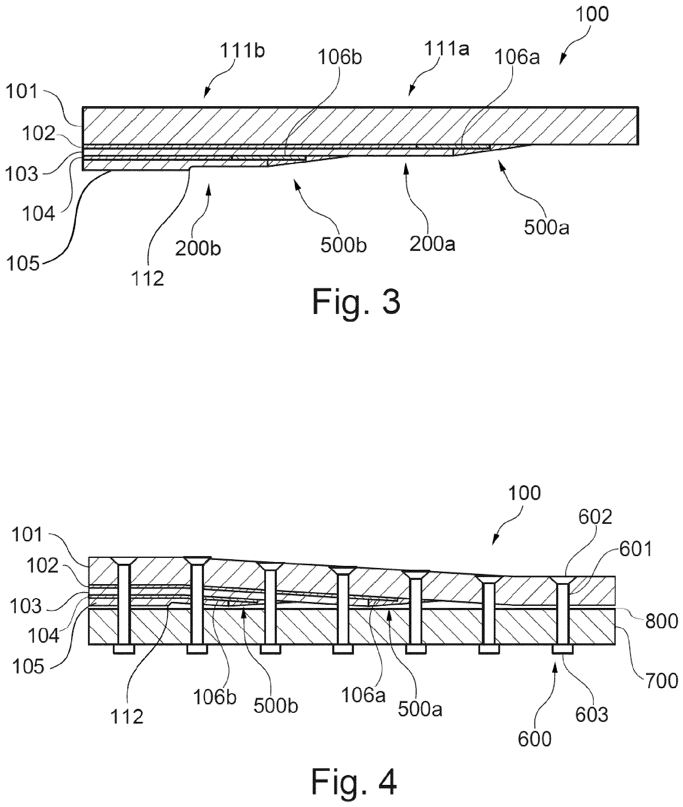

Fig. 3 schematically depicts a side sectional view of an aircraft structure part 100 according to an embodiment of the invention in the post-autoclaving state. In the run-out regions 200a, b the wedge-shaped elements 500a, b are formed and the metal layers comprising basic layer 100, first doubler 103 and second doubler 105 are bonded to each other. A step-shaped configuration of the aircraft structure part 100 has been generated without the need for milling the parts to a major extend.

The thickness of the second doubler 105 is further reduced by providing at least one step 112 in the surface of this element. The layers of fiber material generated from the fiber prepreg layers 106a, b placed underneath the first doubler 103 and the second doubler 105, respectively prevent cracks formed in the wedge-shaped elements 500a, b formed adjacent to the first doubler 103 and the second doubler 105from propagating in the metal layers and to grow towards the basic layer 101 and hence the metallic outer skin.

Fig. 4 schematically depicts a side sectional view of an aircraft structure part 100 according to an embodiment of the invention clamped to the inner skin 700 of an aircraft fuselage. The aircraft structure part 100 as described in connection with Fig. 3 is placed on the inner skin 700 of an aircraft fuselage and fastened to the inner skin 700 by means of a plurality of fastener elements 600, wherein the fastener elements 600 extend through the basic layer 101 forming the outer skin of the aircraft fuselage and the inner skin 700. Fig 4 depicts a configuration wherein the basic skin 101 and the inner skin 700 are connected by means of rivets acting as fastener elements 600, with a first, upper rivet head 602 being countersunk flush into the basic layer 101 and the second, lower rivet head 603 resting on the inner skin 700 with the rivet shaft 601 connection first rivet head 602 and second rivet head 603. The fastener elements 600 clamp the aircraft structure part 100 with the inner skin 700 thereby bending the layers of the aircraft structure part 100 of the invention at least partially towards the inner skin 700. The stacked configuration prevents crack formation in the metal layers during bending and the fiber prepreg layers 106a, b prevent propagation of cracks formed in the wedge-shaped elements 500a, b formed adjacent to the first doubler 103 and the second doubler 105 into the metal layers. Thus a smooth transition of load carrying metal layers in a longitudinal direction of a stepped joint is reached and crack propagation beyond the wedge-shaped elements 500a, b is prevented. The thickness of the second doubler 105 is further reduced by providing at least one step 112 in the surface of this element. The gap 800 remaining between the aircraft structure part 100 and the inner skin 700 after connection is filled with a sealant (not shown), preferably an interference sealant.

### LIST OF REFERENCE SIGNS

- 100: aircraft structure part
- 101: basic layer
- 102: first intermediate bond film layer
- 103: first doubler
- 104: second intermediate bond film layer
- 105: second doubler
- 106a, b: fiber prepreg layer
- 107: first bond-film segment
- 108: second bond-film segment
- 109: third bond film segment
- 110: fourth bond-film segment
- 111a, b: perimeter
- 112: step
- 200a,b: run-out region
- 400a, b: forming sheet
- 401a, b: separation foil
- 500a, b: wedge-shaped element
- 600: fastener element
- 601: rivet shaft
- 602: first rivet head
- 603: second rivet head
- 700: inner skin
- 800: gap

## Claims

1. Aircraft structure part (100) having a stacked arrangement of layers with the layers being one of an at least first doubler (103) and a basic layer (101) of the outer skin of an aircraft fuselage, with the first doubler (103) and the basic layer (101) being bonded by means of a first intermediate bond film layer (102) to form a step-shaped configuration of the aircraft structure part (100), wherein the first doubler (103) comprises a first fiber prepreg layer (106a), in particular glass fiber prepreg layer, arranged at the perimeter (111a) of the first doubler (103) and wherein the first fiber prepreg layer (106a) is bonded to the basic layer (101) by means of at least one first bond-film segment (107) deposited adjacent to the first fiber prepreg layer (106a) in a first wedge-shaped element (500a) at least partially incorporating the first fiber prepreg layer (106a).

2. Aircraft structure part (100) according to claim 1, comprising at least one second doubler (105) with a second fiber prepreg layer (106b) arranged at the perimeter (111b) of the second doubler (105) wherein the second doubler (105) is bonded to the first doubler (103) by means of a second intermediate bond film layer (104) to form a step-shaped configuration of the aircraft structure part (100) and wherein the second fiber prepreg layer (106b) is bonded to the first doubler (103) by means of at least one second bond film segment (108) deposited adjacent to the second fiber prepreg layer (106b) in a second wedge-shaped element (500b) at least partially incorporating the second fiber prepreg layer (106b).

3. Aircraft structure part (100) according to any of claims 1 or 2, wherein the at least first and second wedge-shaped elements (500a, b) are positioned in a run-out region (200a, b) of the first doubler (103) and the second the doubler (105), respectively.

4. Aircraft structure part (100) according to any of claims 1 to 3, wherein the fibers of the fiber prepreg layers (106a, b) are oriented in a circumferential direction of the first doubler (103) and second doubler (105).

5. Aircraft structure part (100) according to any of claims 1 to 4, wherein each of the first and second fibre prepreg layer (106a,b) is arranged coplanar to a surface plane of the respective first doubler (103) and the second doubler (105) and projecting beyond the surface plane of the respective doubler (103, 105).

6. Aircraft structure part (100) according to any of claims 1 to 5, wherein at least the wedge-shaped elements (500a, b) are formed in an autoclaving process.

7. Method for providing an aircraft structure part (100) according to any one of claims 1 to 6, wherein the method comprises depositing on a surface of the basic layer (101) of the aircraft structure part (100) facing the inner skin (700) of an aircraft fuselage a first intermediate bond film layer (102), depositing a first fiber prepreg layer (106a), in particular a glass fiber prepreg layer, adjacent to first intermediate bond film layer (102), depositing a first doubler (103) on the first intermediate bond film layer (102) and the fiber prepreg layer (106a) in such a way that an area of the first fiber prepreg layer (106a) extends beyond the perimeter (111a) of the first doubler (103), depositing at least a first bond film segment (107) adjacent to the first fiber prepreg layer (106a) and autoclaving the aircraft structure part (100) to form a first wedge shaped element (500a) in a run-out region (200a) of the first doubler (103) incorporating the area of the first fiber prepreg layer (106a) extending beyond the perimeter (111a) of the first doubler (103).

8. Method according to claim 7, wherein a second bond film segment (108) is deposited covering the area of the first fiber prepreg layer (106a) extending beyond the perimeter (111a) of the first doubler (103) and the first bond film segment (107).

9. Method according to claim 7 or 8, wherein a second intermediate bond film layer (104) and a second fiber prepreg layer (106b) arranged adjacent to the second intermediate bond film layer (104) is deposited on the first doubler (103) and at least one second doubler (105) is deposited on the second intermediate bond film layer (104) and the second fiber prepreg layer (106b) with the second fiber prepreg layer (106b) extending beyond the perimeter (111b) of the second doubler (105), depositing a third bond film segment (109) adjacent to the second fiber prepreg layer (116b) and autoclaving the aircraft structure part (100) to form a second wedge shaped element (500b) in a run-our region (200b) of the second doubler (105) incorporating the area of the second fiber prepreg layer (106b) extending beyond the perimeter (111b) of the second doubler (105).

10. Method according to claim any of claims 7 to 9, wherein a fourth bond film segment (110) is deposited covering the area of the second fiber prepreg layer (106b) extending beyond the perimeter (111b) of the second doubler (105) and the third bond film segment (109).

11. Method according to any of claims 7 to 10, wherein at least one further doubler is deposited on the second doubler (105) in a method according to any of claims 9 or 10.

12. Method according to any of claims 7 to 11, wherein before autoclaving at least on separation foil (401a, b) and a forming sheet (400a, b) is deposited on the run-out region (200a, b) of at least one of the first doubler (103) and the second doubler (105) to form at least one of the first and the second wedge-shaped element (500a, b) during autoclaving.

13. Method according to any of claims 7 to 12, wherein the aircraft structure part (100) is placed on the inner skin (700) of an aircraft fuselage and fastened to the inner skin (700) by means of a plurality of fastener elements (), wherein the fastener elements (600) extend through the basic layer (101) and the inner skin (700) and clamp the aircraft structure part (700) with the inner skin (700) thereby bending the basic layer (101) and the at least one doubler (103) at least partially towards the inner skin (700).

14. Method according to any of claims 7 to 13, wherein a gap (800) formed between the aircraft structure part (100) and the inner skin (700) is filled with a sealant, in particular an interference sealant.

15. Aircraft fuselage provided with an aircraft structure part (100) according to any of claims 1 to 6, wherein the aircraft structure part (100) is a load carrying part of the aircraft fuselage.

## Patentansprüche

1. Flugzeugstrukturteil (100) mit einer geschichteten Anordnung von Lagen, wobei die Lagen mindestens eine erste Verstärkungslage (Doubler) (103) und eine Basislage (101) der Außenhaut eines Flugzeugrumpfs sind, wobei die erste Verstärkungslage (103) und die Basislage (101) mittels einer ersten Zwischenklebefilmlage (102) verklebt sind, um eine stufenförmige Konfiguration des Flugzeugstrukturteils (100) zu bilden, wobei die erste Verstärkungslage (103) eine erste Faser-Prepreg-Lage (106a), insbesondere eine Glasfaser-Prepreg-Lage, umfasst, die am Umfang (111a) der ersten Verstärkungslage (103) angeordnet ist, und wobei die erste Faser-Prepreg-Lage (106a) mit der Basislage (101) mittels mindestens eines ersten Klebefilmsegments (107) verklebt ist, das angrenzend an die erste Faser-Prepreg-Lage (106a) in einem ersten keilförmigen Element (500a) aufgebracht ist, das die erste Faser-Prepreg-Lage (106a) zumindest teilweise aufnimmt.

2. Flugzeugstrukturteil (100) nach Anspruch 1, umfassend mindestens eine zweite Verstärkungslage (105) mit einer zweiten Faser-Prepreg-Lage (106b), die am Umfang (111b) der zweiten Verstärkungslage (105) angeordnet ist, wobei die zweite Verstärkungslage (105) mit der ersten Verstärkungslage (103) mittels einer zweiten Zwischenklebefilmlage (104) verklebt ist, um eine stufenförmige Konfiguration des Flugzeugstrukturteils (100) zu bilden, und wobei die zweite Faser-Prepreg-Lage (106b) mit der ersten Verstärkungslage (103) mittels mindestens eines zweiten Klebefilmsegments (108) verklebt ist, das angrenzend an die zweite Faser-Prepreg-Lage (106b) in einem zweiten keilförmigen Element (500b) aufgebracht ist, das die zweite Faser-Prepreg-Lage (106b) zumindest teilweise aufnimmt.

3. Flugzeugstrukturteil (100) nach einem der Ansprüche 1 oder 2, wobei das mindestens erste und zweite keilförmige Element (500a, b) in einem Auslaufbereich (200a, b) der ersten Verstärkungslage (103) bzw. der zweiten Verstärkungslage (105) positioniert sind.

4. Flugzeugstrukturteil (100) nach einem der Ansprüche 1 bis 3, wobei die Fasern der Faser-Prepreg-Lagen (106a, b) in einer Umfangsrichtung der ersten Verstärkungslage (103) und der zweiten Verstärkungslage (105) ausgerichtet sind.

5. Flugzeugstrukturteil (100) nach einem der Ansprüche 1 bis 4, wobei sowohl die erste als auch die zweite Faser-Prepreg-Lage (106a, b) koplanar zu einer Oberflächenebene der jeweiligen ersten Verstärkungslage (103) und zweiten Verstärkungslage (105) angeordnet ist und über die Oberflächenebene der jeweiligen Verstärkungslage (103, 105) hinausragt.

6. Flugzeugstrukturteil (100) nach einem der Ansprüche 1 bis 5, wobei zumindest die keilförmigen Elemente (500a, b) in einem Autoklavierverfahren ausgebildet sind.

7. Verfahren zum Bereitstellen eines Flugzeugstrukturteils (100) nach einem der Ansprüche 1 bis 6, wobei das Verfahren umfasst: Aufbringen einer ersten Zwischenklebefilmlage (102) auf eine Oberfläche der Basislage (101) des Flugzeugstrukturteils (100), die der Innenhaut (700) eines Flugzeugrumpfs zugewandt ist, Aufbringen einer ersten Faser-Prepreg-Lage (106a), insbesondere einer Glasfaser-Prepreg-Lage, angrenzend an die erste Zwischenklebefilmlage (102), Aufbringen einer ersten Verstärkungslage (103) auf der ersten Zwischenklebefilmlage (102) und der Faser-Prepreg-Lage (106a) derart, dass sich ein Bereich der ersten Faser-Prepreg-Lage (106a) über den Umfang (111a) der ersten Verstärkungslage (103) hinaus erstreckt, Aufbringen mindestens eines ersten Klebefilmsegments (107) angrenzend an die erste Faser-Prepreg-Lage (106a) und Autoklavieren des Flugzeugstrukturteils (100), um ein erstes keilförmiges Element (500a) in einem Auslaufbereich (200a) der ersten Verstärkungslage (103) zu bilden, das den Bereich der ersten Faser-Prepreg-Lage (106a) aufnimmt, der sich über den Umfang (111a) der ersten Verstärkungslage (103) hinaus erstreckt.

8. Verfahren nach Anspruch 7, wobei ein zweites Klebefilmsegment (108) aufgebracht wird, das den Bereich der ersten Faser-Prepreg-Lage (106a), der sich über den Umfang (111a) der ersten Verstärkungslage (103) hinaus erstreckt, und das erste Klebefilmsegment (107) abdeckt.

9. Verfahren nach Anspruch 7 oder 8, wobei eine zweite Zwischenklebefilmlage (104) und eine zweite Faser-Prepreg-Lage (106b), die angrenzend an die zweite Zwischenklebefilmlage (104) angeordnet ist, auf die erste Verstärkungslage (103) aufgebracht werden und mindestens eine zweite Verstärkungslage (105) auf die zweite Zwischenklebefilmlage (104) und die zweite Faser-Prepreg-Lage (106b) aufgebracht wird, wobei sich die zweite Faser-Prepreg-Lage (106b) über den Umfang (111b) der zweiten Verstärkungslage (105) hinaus erstreckt, Aufbringen eines dritten Klebefilmsegments (109) angrenzend an die zweite Faser-Prepreg-Lage (106b) und Autoklavieren des Flugzeugstrukturteils (100), um ein zweites keilförmiges Element (500b) in einem Auslaufbereich (200b) der zweiten Verstärkungslage (105) zu bilden, das den Bereich der zweiten Faser-Prepreg-Lage (106b) aufnimmt, der sich über den Umfang (111b) der zweiten Verstärkungslage (105) hinaus erstreckt.

10. Verfahren nach einem der Ansprüche 7 bis 9, wobei ein viertes Klebefilmsegment (110) aufgebracht wird, das den Bereich der zweiten Faser-Prepreg-Lage (106b), der sich über den Umfang (111b) der zweiten Verstärkungslage (105) hinaus erstreckt, und das dritte Klebefilmsegment (109) abdeckt.

11. Verfahren nach einem der Ansprüche 7 bis 10, wobei mindestens eine weitere Verstärkungslage auf die zweite Verstärkungslage (105) in einem Verfahren nach einem der Ansprüche 9 oder 10 aufgebracht wird.

12. Verfahren nach einem der Ansprüche 7 bis 11, wobei vor dem Autoklavieren mindestens eine Trennfolie (401a, b) und eine Formplatte (400a, b) auf dem Auslaufbereich (200a, b) mindestens einer von der ersten Verstärkungslage (103) und der zweiten Verstärkungslage (105) aufgebracht werden, um mindestens eines von dem ersten und dem zweiten keilförmigen Element (500a, b) während des Autoklavierens zu bilden.

13. Verfahren nach einem der Ansprüche 7 bis 12, wobei das Flugzeugstrukturteil (100) auf der Innenhaut (700) eines Flugzeugrumpfs platziert und an der Innenhaut (700) mittels einer Vielzahl von Befestigungselementen (600) befestigt wird, wobei sich die Befestigungselemente (600) durch die Basislage (101) und die Innenhaut (700) erstrecken und das Flugzeugstrukturteil (100) mit der Innenhaut (700) verspannen, wodurch die Basislage (101) und die mindestens eine Verstärkungslage (103) zumindest teilweise zur Innenhaut (700) hin gebogen werden.

14. Verfahren nach einem der Ansprüche 7 bis 13, wobei ein zwischen dem Flugzeugstrukturteil (100) und der Innenhaut (700) ausgebildeter Spalt (800) mit einem Dichtmittel, insbesondere einem Passungsdichtmittel, gefüllt wird.

15. Flugzeugrumpf, versehen mit einem Flugzeugstrukturteil (100) nach einem der Ansprüche 1 bis 6, wobei das Flugzeugstrukturteil (100) ein lasttragendes Teil des Flugzeugrumpfs ist.

## Revendications

1. Pièce de structure d'aéronef (100) présentant un agencement empilé de couches, les couches étant constituées d'au moins une première doublure (103) et d'une couche de base (101) du revêtement extérieur d'un fuselage d'aéronef, la première doublure (103) et la couche de base (101) étant liées au moyen d'une première couche intermédiaire de film d'adhésif (102) pour former une configuration étagée de la pièce de structure d'aéronef (100), dans laquelle la première doublure (103) comprend une première couche de préimprégné de fibres (106a), en particulier une couche de préimprégné de fibres de verre, agencée au niveau du périmètre (111a) de la première doublure (103) et dans laquelle la première couche de préimprégné de fibres (106a) est liée à la couche de base (101) au moyen d'au moins un premier segment de film d'adhésif (107) déposé de manière adjacente à la première couche de préimprégné de fibres (106a) dans un premier élément en forme de coin (500a) englobant au moins partiellement la première couche de préimprégné de fibres (106a).

2. Pièce de structure d'aéronef (100) selon la revendication 1, comprenant au moins une deuxième doublure (105) avec une deuxième couche de préimprégné de fibres (106b) agencée au niveau du périmètre (111b) de la deuxième doublure (105), dans laquelle la deuxième doublure (105) est liée à la première doublure (103) au moyen d'une deuxième couche intermédiaire de film d'adhésif (104) pour former une configuration étagée de la pièce de structure d'aéronef (100), et dans laquelle la deuxième couche de préimprégné de fibres (106b) est liée à la première doublure (103) au moyen d'au moins un deuxième segment de film d'adhésif (108) déposé de manière adjacente à la deuxième couche de préimprégné de fibres (106b) dans un deuxième élément en forme de coin (500b) englobant au moins partiellement la deuxième couche de préimprégné de fibres (106b).

3. Pièce de structure d'aéronef (100) selon l'une quelconque des revendications 1 ou 2, dans laquelle les au moins premier et deuxième éléments en forme de coin (500a, b) sont positionnés dans une zone de dégressivité (200a, b) de la première doublure (103) et de la deuxième doublure (105), respectivement.

4. Pièce de structure d'aéronef (100) selon l'une quelconque des revendications 1 à 3, dans laquelle les fibres des couches de préimprégné de fibres (106a, b) sont orientées dans une direction circonférentielle de la première doublure (103) et de la deuxième doublure (105).

5. Pièce de structure d'aéronef (100) selon l'une quelconque des revendications 1 à 4, dans laquelle chacune de la première et de la deuxième couche de préimprégné de fibres (106a, b) est agencée de manière coplanaire par rapport à un plan de surface de la première doublure (103) et de la deuxième doublure (105) respective et s'étend en saillie au-delà du plan de surface de la doublure (103, 105) respective.

6. Pièce de structure d'aéronef (100) selon l'une quelconque des revendications 1 à 5, dans laquelle au moins les éléments en forme de coin (500a, b) sont formés dans un procédé de traitement en autoclave.

7. Procédé pour fournir une pièce de structure d'aéronef (100) selon l'une quelconque des revendications 1 à 6, dans lequel le procédé comprend le dépôt, sur une surface de la couche de base (101) de la pièce de structure d'aéronef (100) orientée vers le revêtement intérieur (700) d'un fuselage d'aéronef, d'une première couche intermédiaire de film d'adhésif (102), le dépôt d'une première couche de préimprégné de fibres (106a), en particulier une couche de préimprégné de fibres de verre, de manière adjacente à la première couche intermédiaire de film d'adhésif (102), le dépôt d'une première doublure (103) sur la première couche intermédiaire de film d'adhésif (102) et la couche de préimprégné de fibres (106a) de telle manière qu'une zone de la première couche de préimprégné de fibres (106a) s'étende au-delà du périmètre (111a) de la première doublure (103), le dépôt d'au moins un premier segment de film d'adhésif (107) de manière adjacente à la première couche de préimprégné de fibres (106a) et le passage en autoclave de la pièce de structure d'aéronef (100) pour former un premier élément en forme de coin (500a) dans une zone de dégressivité (200a) de la première doublure (103) englobant la zone de la première couche de préimprégné de fibres (106a) s'étendant au-delà du périmètre (111a) de la première doublure (103).

8. Procédé selon la revendication 7, dans lequel un deuxième segment de film d'adhésif (108) est déposé en recouvrant la zone de la première couche de préimprégné de fibres (106a) s'étendant au-delà du périmètre (111a) de la première doublure (103) et le premier segment de film d'adhésif (107).

9. Procédé selon la revendication 7 ou 8, dans lequel une deuxième couche intermédiaire de film d'adhésif (104) et une deuxième couche de préimprégné de fibres (106b) agencée de manière adjacente à la deuxième couche intermédiaire de film d'adhésif (104) sont déposées sur la première doublure (103) et au moins une deuxième doublure (105) est déposée sur la deuxième couche intermédiaire de film d'adhésif (104) et la deuxième couche de préimprégné de fibres (106b), la deuxième couche de préimprégné de fibres (106b) s'étendant au-delà du périmètre (111b) de la deuxième doublure (105), le dépôt d'un troisième segment de film d'adhésif (109) de manière adjacente à la deuxième couche de préimprégné de fibres (116b) et le passage en autoclave de la pièce de structure d'aéronef (100) pour former un deuxième élément en forme de coin (500b) dans une zone de dégressivité (200b) de la deuxième doublure (105) englobant la zone de la deuxième couche de préimprégné de fibres (106b) s'étendant au-delà du périmètre (111b) de la deuxième doublure (105).

10. Procédé selon l'une quelconque des revendications 7 à 9, dans lequel un quatrième segment de film d'adhésif (110) est déposé en recouvrant la zone de la deuxième couche de préimprégné de fibres (106b) s'étendant au-delà du périmètre (111b) de la deuxième doublure (105) et le troisième segment de film d'adhésif (109).

11. Procédé selon l'une quelconque des revendications 7 à 10, dans lequel au moins une doublure supplémentaire est déposée sur la deuxième doublure (105) selon un procédé conforme à l'une quelconque des revendications 9 ou 10.

12. Procédé selon l'une quelconque des revendications 7 à 11, dans lequel, avant le passage en autoclave, au moins une feuille de séparation (401a, b) et une feuille de formage (400a, b) sont déposées sur la zone de dégressivité (200a, b) d'au moins l'une de la première doublure (103) et de la deuxième doublure (105) pour former au moins l'un du premier et du deuxième élément en forme de coin (500a, b) pendant le passage en autoclave.

13. Procédé selon l'une quelconque des revendications 7 à 12, dans lequel la pièce de structure d'aéronef (100) est placée sur le revêtement intérieur (700) d'un fuselage d'aéronef et fixée au revêtement intérieur (700) au moyen d'une pluralité d'éléments de fixation (600), dans lequel les éléments de fixation (600) s'étendent à travers la couche de base (101) et le revêtement intérieur (700) et serrent la pièce de structure d'aéronef (100) avec le revêtement intérieur (700), faisant ainsi fléchir la couche de base (101) et l'au moins une doublure (103) au moins partiellement vers le revêtement intérieur (700).

14. Procédé selon l'une quelconque des revendications 7 à 13, dans lequel un interstice (800) formé entre la pièce de structure d'aéronef (100) et le revêtement intérieur (700) est rempli d'un mastic d'étanchéité, en particulier un mastic d'étanchéité à serrage fort.

15. Fuselage d'aéronef pourvu d'une pièce de structure d'aéronef (100) selon l'une quelconque des revendications 1 à 6, dans lequel la pièce de structure d'aéronef (100) est une pièce porteuse du fuselage d'aéronef.
